# FASCICULE DE BREVET EUROPEEN

(11) **EP 1 931 543 B1**
(45) Date de publication et mention de la délivrance du brevet: **11.08.2010**
(21) Numéro de dépôt: 06831212.3
(22) Date de dépôt: 21.09.2006
(51) Int. Cl.: B60S 1/24

(54) **DISPOSITIF D'ENTRAINEMENT D'ESSUIE-VITRE MUNI D'UN CASSE-GOUTTE**
VORRICHTUNG ZUM ANTRIEB EINES SCHEIBENWISCHERS MIT TROPFENBRECHER
DEVICE FOR DRIVING A WINDSCREEN WIPER EQUIPPED WITH A DROP-BREAKER

(30) Priorité: 27.09.2005 FR 0509862
(43) Date de publication de la demande: 18.06.2008
(73) Titulaire: RENAULT S.A.S., 92100 Boulogne Billancourt (FR)
(72) Inventeur: DEYSSON, Guillaume, F-78180 Montigny le Bretonneux (FR); VIGNEAU, Cédric, F-78390 Bois d'Arcy (FR); PERREUX, Philippe, F-78620 L'Etang La Ville (FR); PIN, Michael, F-78280 Guyancourt (FR)
(86) Numéro de dépôt international: PCT/FR2006/050924
(87) Numéro de publication internationale: WO 2007/036661

(56) Documents cités:
- DE-A1- 19 963 918
- US-A- 3 788 681
- US-A- 5 522 280
- US-B1- 6 691 366

## Description

L'invention concerne un dispositif d'entraînement d'essuie-vitre, du type comprenait au moins deux organes d'entraînement constitués d'une et d'une manivelle d'entraînement de l'axe d'un balai d'essuie-vitre.

Du côte passager, il arrive que compte tenu de l'exiguïté des lieux, certaines parties de la bielle et/ou de la manivelle passent au-dessus de l'écope d'entrée d'air du système d'aération et de chauffage.

Le document DE-A-19963918 décrit un dispositif d'entrainement d'essuie-vitre, comprenant au moins deux organes d'entraînement constitués d'un bielle et d'une manivelle d'entraînement de l'axe d'un balai d'essuie-vitre.

La Demanderesse a découvert qu'il y avait parfois dans les conduits de chauffage des entrées d'eau risquant de se pulvériser dans l'habitacle quand la ventilation est en marche.

Le brut de l'invention est de résoudre ce problème.

L'invention atteint son but en proposant de placer sur la bielle et/ou la manivelle un système casse-goutte à un endroit éloigné du surplomb de ladite écope d'entrée d'air.

La Demanderesse a en effet analysé que ces entrées d'eau dans les conduits de chauffage étaient dues au phénomène suivant : de l'eau chemine par capillarité à la surface inférieure des organes d'entraînement (manivelle et bielle) depuis l'axe d'essuie-vitre. Lors du mouvement desdits organes au-dessus de l'écope, de l'eau qui ruisselle peut être aspirée et être entraînée dans les conduits de chauffage.

Grâce a l'invention, un ou des casse-gouttes localisés permettent de décider à l'avance que les goutte se formeront à un endroit déterminé éloigné de l'aplomb de l'écope, de manière à ne pas risquer d'entrer dans les circuits.

Avantageusement, le casse-goutte est constitué par une rupture de la surface de l'organe ou ils sont disposés, notamment un relief abrupt formé sur cette surface, on un découpe dans la surface ou dans les arêtes de la surface.

Avantageusement, le casse-goutte est constitué de deux ergots saillants séparés par quelques millimètres et placés sous la surface inférieure de la bielle.

D'autres caractéristiques et avantages de l'invention apparaîtront à la lecture de la description suivante, en référence aux dessins annexés sur lesquels :
- la figure 1 est une vue en perspective schématique du dispositif d'entraînement des essuie-vitres d'un véhicule automobile, vue du dessus.
- la figure 2 est une vue en perspective schématique partielle des mêmes éléments que la figure 1, vue de côté.

Le dispositif d'entraînement de l'essuie-vitre du pare-brise d'un véhicule comporte typiquement un châssis 1 supportant deux bras fixes 2 portant chacun à une extrémité le support-palier 3 de l'axe 4 d'un balai essuie-vitre. Cet axe 4 est entraîné en rotation alternée par une manivelle 5 à deux coudes, elle-même entraînée par une bielle 6 articulée d'un côté sur ladite manivelle 5 et de l'autre sur un axe 7 entraîné en translation alternative (va-et-vient) par un moteur 8 porté sur le châssis 1. La bielle 6 du côté passager passe en partie au-dessus de l'écope d'entrée d'air 10 du système d'aération et de chauffage du véhicule.

Si de l'eau ruisselle le long de la bielle passager 6, elle risque d'être aspirée par l'écope d'entrée d'air 10, Une telle entrée d'eau dans l'écope entraîne de l'eau dans les conduits de chauffage puis dans l'habitacle lorsque le conducteur met la ventilation en route, avec phénomène de pulvérisation

Selon l'invention, il est prévu un casse-goutte placé a un endroit qui permet au filet d'eau de se rompre dans une région autre que la région en surplomb de l'écope 10 ; l'eau tombera alors dans une zone définie de la boîte à eau, sans risque.

Le casse-goutte peut être installé sur la bielle passager 6 et/ou sur la manivelle passager 5. Il consiste d'une manière générale en une rupture des surfaces continues de l'organe concerné (bielle ou manivelle) de manière à forcer le filet d'eau à se casser en gouttes. Cette rupture peut prendre par exemple la forme d'ergots disposés sur la surface de l'organe: ou de petites découpes des arêtes de l'organe concerné.

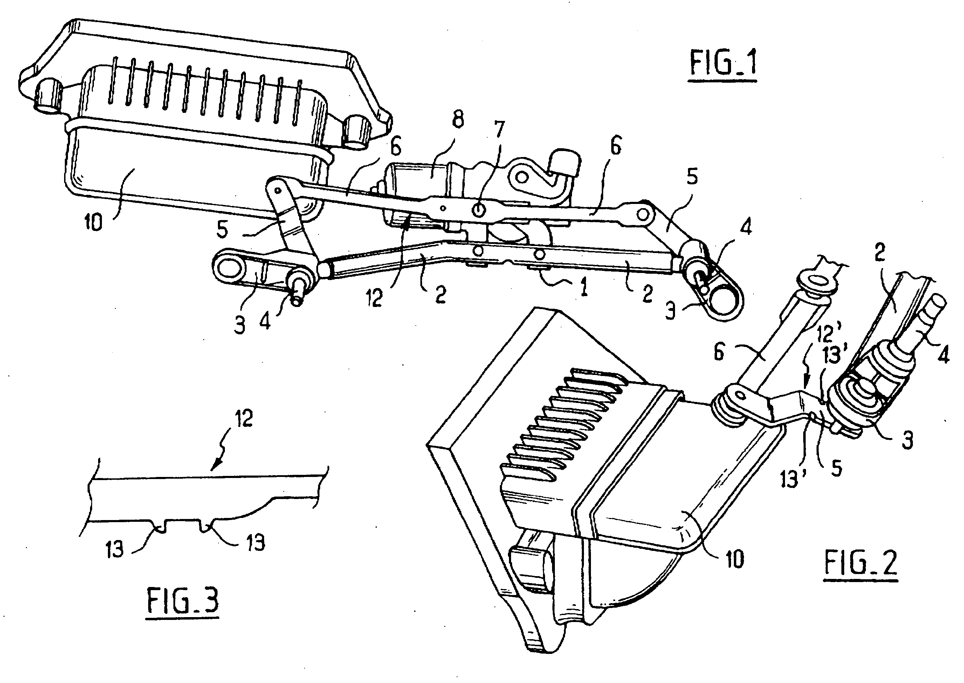

Selon un premier mode de réalisation représenté figure 1, le système casse-goutte 12 est disposé sur la bielle passager 6 dans une région de la, bielle toujours éloignée de l'écope 10. Il est constitué par au moins un ergot, de préférence deux ergots saillants 13, disposés sous la bielle 6, par exemple comme représenté en figure 3, là où l'eau est véhiculée par capillarité. Le ou les ergots 13 brisent le chemin du filet d'eau est la forcent à tomber à un endroit déterminé éloigné de l'écope 10. Ces ergots 13 placés sous la surface inférieure de la bielle 13 ne modifient pas les caractéristiques mécaniques de la bielle (inertie du « U », rigidité, fonctionnement). Les deux ergots peuvent former deux angles vifs (par exemple de 90°) espacés de quelque millimètres, obligeant l'eau à couler au droit des ergots.

Selon un second mode de réalisation, cumulable avec le premier mode de réalisation, le système casse-goutte 12' est placé sur la manivelle passager 5 : le principe consiste à casser les arrêtes de la manivelle 5, par une ou plusieurs petites découpes 13' par exemple en are de cercle, sur la partie de la manivelle 5 la plus proche de l'axe 4. Avantageusement, il est prévu une découpe 13' sur chacune des deux arêtes de la manivelle.

## Revendications

1. Ensemble d'un dispositif d'entraînement d'essuie-vitre et d'une écope (10) d'entrée d'air du système d'aération et de chauffage d'un véhicule automobile, comprenant au moins deux organes d'entraînement constitués d'une bielle (6) et d'une manivelle (5) d'entraînement de l'axe (4) d'un balai d'essuie-vitre, certaines parties de la bielle (6) et/ou de la manivelle (5) passant au-dessus de l'écope (10) d'entrée d'air du système d'aération et de chauffage du véhicule, **caractérisé par** un casse-goutte (12, 12') placé sur la bielle (6) et/ou la manivelle (5) à un endroit éloigné du surplomb de ladite écope (10) d'entrée d'air.

2. Ensemble d'un dispositif d'entrainement d'essuie-vitre et d'une écope (10) selon la revendication 1, **caractérisé en ce que** le casse-goutte (12, 12') est constitué par une rupture de la surface de l'organe où il est disposé.

3. Ensemble d'un dispositif d'entrainement d'essuie-vitre et d'une écope (10) selon la revendication 2, **caractérisé en ce que** le casse-goutte (12) est constitué par un relief abrupt formé sur cette surface.

4. Ensemble d'un dispositif d'entrainement d'essuie-vitre et d'une écopé (10) selon la revendication 3, **caractérisé en ce que** le casse-goutte (12) est placé sur la bielle (6).

5. Ensemble d'un dispositif d'entrainement d'essuie-vitre et d'une écope selon l'une quelconque des revendications 3 ou 4, **caractérisé en ce que** le casse-goutte (12) est constitué de deux ergots (13) saillants séparés par quelques millimètres et placés sous la surface inférieure de la bielle,

6. Ensemble d'un dispositif d'entrainement d'essuie-vitre et d'une écope (10) selon la revendication 2, **caractérisé en ce que** le casse-goutte (12') est constitué par une découpe (13') dans la surface de l'organe ou dans des arêtes de la surface.

7. Ensemble d'un dispositif d'entrainement d'essuie-vitre et d'une écope (10) selon la revendication 6, **caractérisé en ce que** le casse-goutte (12') est placé sur la manivelle (5).

## Claims

1. Assembly made up of a device for driving a windscreen wiper and of an air intake scoop (10) of the ventilation and heating system of a motor vehicle, comprising at least two drive members consisting of a connecting rod (6) and of a crank (5) for driving the spindle (4) of a wiper arm, some parts of the connecting rod (6) and/or of the crank (5) passing over the air intake scoop (10) of the vehicle ventilation and heating system, **characterized by** a drop-breaker (12, 12') positioned on the connecting rod (6) and/or on the crank (5) at a location that will not pass vertically over said air intake scoop (10).

2. Assembly made up of a device for driving a windscreen wiper and of a scoop (10) according to Claim 1, **characterized in that** the drop-breaker (12, 12') consists of a discontinuity in the surface of the component on which it is positioned.

3. Assembly made up of a device for driving a windscreen wiper and of a scoop (10) according to Claim 2, **characterized in that** the drop-breaker (12) consists of an abrupt relief formed on this surface.

4. Assembly made up of a device for driving a windscreen wiper and of a scoop (10) according to Claim 3, **characterized in that** the drop-breaker (12) is placed on the connecting rod (6).

5. Assembly made up of a device for driving a windscreen wiper and of a scoop according to either one of Claims 3 and 4, **characterized in that** the drop-breaker (12) consists of two projecting lugs (13) a few millimeters apart and positioned under the underside of the connecting rod.

6. Assembly made up of a device for driving a windscreen wiper and of a scoop (10) according to Claim 2, **characterized in that** the drop-breaker (12') consists of a cutout (13') in the surface of the component or in edge faces of the surface.

7. Assembly made up of a device for driving a windscreen wiper and of a scoop (10) according to Claim 6, **characterized in that** the drop-breaker (12') is positioned on the crank (5).

## Patentansprüche

1. Anordnung aus einer Scheibenwischerantriebsvorrichtung und einem Lufteinlassschacht (10) des Lüftungs- und Heizungssystems eines Kraftfahrzeugs, mit wenigstens zwei Antriebsorganen, die aus einem Pleuel (6) und einer Kurbel (5) für den Antrieb der Welle (4) eines Scheibenwischerarms gebildet sind, wobei bestimmte Teile des Arms (6) und/oder der Kurbel (5) über dem Lufteinlassschacht (10) des Lüftungs- und Heizungssystems des Fahrzeugs verlaufen, **gekennzeichnet durch** einen auf dem Pleuel (6) und/oder der Kurbel (5) an einem von der Auskragung des Lufteinlassschachts (10) entfernten Ort angeordneten Tropfkasten (12, 12').

2. Anordnung aus einer Scheibenwischerantriebsvorrichtung und einem Schacht (10) nach Anspruch 1, **dadurch gekennzeichnet, dass** der Tropfkasten (12, 12') durch eine Unterbrechung der Oberfläche des Organs, an dem der angeordnet ist, gebildet ist.

3. Anordnung aus einer Scheibenwischerantriebsvorrichtung und einem Schacht (10) nach Anspruch 2, **dadurch gekennzeichnet, dass** der Tropfkasten (12) durch ein scharfes Relief, das in dieser Oberfläche ausgebildet ist, gebildet ist.

4. Anordnung aus einer Scheibenwischerantriebsvorrichtung und einem Schacht (10) nach Anspruch 3, **dadurch gekennzeichnet, dass** der Tropfkasten (12) auf dem Pleuel (6) angeordnet ist.

5. Anordnung aus einer Scheibenwischerantriebsvorrichtung und einem Schacht nach einem der Ansprüche 3 oder 4, **dadurch gekennzeichnet, dass** der Tropfkasten (12) aus zwei vorstehenden Ansätzen (13) gebildet ist, die um einige Millimeter voneinander getrennt sind und unter der unteren Oberfläche des Pleuels angeordnet sind.

6. Anordnung aus einer Scheibenwischerantriebsvorrichtung und einem Schacht (10) nach Anspruch 2, **dadurch gekennzeichnet, dass** der Tropfkasten (12') durch einen Ausschnitt (13') in der Oberfläche des Organs oder in Kanten der Oberfläche gebildet ist.

7. Anordnung aus einer Scheibenwischerantriebsvorrichtung und einem Schacht (10) nach Anspruch 6, **dadurch gekennzeichnet, dass** der Tropfkasten (12') an der Kurbel (5) angeordnet ist.
